# EUROPÄISCHE PATENTANMELDUNG

(11) **EP 0 656 449 A2**
(43) Veröffentlichungstag der Anmeldung: **07.06.1995**
(21) Anmeldenummer: 94118899.7
(22) Anmeldetag: 30.11.1994
(51) Int. Cl.: E03F 9/00, E03F 3/06, F16L 55/00, B08B 9/04

(54) **Einrichtung, insbesondere für Kanalarbeiten**

(30) Priorität: 03.12.1993 AT 2450/93
(71) Anmelder: Hilbrand, Martin, A-6993 Mittelberg (AT)
(72) Erfinder: Hilbrand, Martin, A-6993 Mittelberg (AT)
(74) Vertreter: Torggler, Paul, Dr.

(57) **Zusammenfassung**

Einrichtung, insbesondere für Kanalarbeiten, mit einem in einem Hauptkanal bewegbaren Hauptgerät und mit einem in einem Nebenkanal einbringbaren Nebengerät, wobei das Hauptgerät (1) eine Umlenkeinheit (8) aufweist, die in mindestens einer Ebene in ihrer Krümmung einstellbar ist, und durch die hindurch oder entlang der das Nebengerät (4) vom Hauptgerät (1) aus in den Nebenkanal (3) einbringbar ist.

## Beschreibung

Die Erfindung betrifft eine Einrichtung, insbesondere für Kanalarbeiten, mit einem in einem Hauptkanal bewegbaren Hauptgerät und mit einem in einem Nebenkanal einbringbaren Nebengerät.

Bei solchen Einrichtungen geht es im allgemeinen darum, in einem Hauptkanal mit größerem Durchmesser das Hauptgerät ferngesteuert bis zu einem vom Hauptkanal abzweigenden bzw.in diesen einmündenden Nebenkanal geringeren Durchmessers zu bewegen, um von dort in diesen Nebenkanal Nebengeräte, wie beispielsweise Sanierungs-, Inspektions- oder Reinigungsgeräte einsetzen zu können.

Die bisher bekannten Einrichtungen boten nur die Möglichkeit, am Hauptgerät befestigte Nebengeräte nur über eine geringe Wegstrecke in den Nebenkanal einzusetzen.

Aufgabe der Erfindung ist es, eine Einrichtung der eingangs genannten Gattung zu schaffen, mit der es möglich ist, vom Hauptgerät aus Nebengeräte unterschiedlichster Art in einen in beliebiger Richtung vom Hauptkanal abzweigenden Nebenkanal, im Bedarfsfall auch weit in diesen Nebenkanal hinein einzusetzen.

Dies wird erfindungsgemäß dadurch erreicht, daß das Hauptgerät eine Umlenkeinheit aufweist, die in mindestens einer Ebene in ihrer Krümmung einstellbar ist, und durch die hindurch oder entlang der das Nebengerät vom Hauptgerät aus in den Nebenkanal einbringbar ist.

Nachdem das Hauptgerät vorzugsweise ferngesteuert bis zur Abzweigung des Nebenkanals vom Hauptkanal gefahren ist, kann die Umlenkeinheit so ausgerichtet werden (ebenfalls vorzugsweise ferngesteuert), daß ihr freies Ende zum Nebenkanal weist. Nunmehr ist es möglich, entlang der in ihrer Krümmung eingestellten Umlenkeinheit, welche vorzugsweise schlauch- oder wannenförmig ausgebildet ist, das Nebengerät durch die Umlenkeinheit hindurch bzw. entlang dieser in den Nebenkanal einzubringen. Die Umlenkeinheit bildet also eine Art weiche, mit der es möglich ist, das Nebengerät gezielt in den Nebenkanal abzuzweigen.

Das Nebengerät kann grundsätzlich selbstfahrend sein und/oder von zu ihm führenden Leitungen in den Nebenkanal geschoben werden. In jedem Fall ist es möglich, das im wesentlichen selbstständige Nebengerät weit in den Nebenkanal hineinzubewegen, wobei im allgemeinen zum Nebengerät führende Leitungen ebenfalls von der Umlenkeinheit vom Hauptkanal aus gezielt in den Nebenkanal umgelenkt werden.

Am Hauptgerät kann vorteilhaft eine Fördereinrichtung für mindestens eine zum Nebengerät führende Leitung vorgesehen sein. Mittels einer solchen Fördereinrichtung ist es einerseits möglich, auch bei weit in den Hauptkanal eingedrungenem Hauptfahrzeuggerät nicht angetriebene Nebengeräte über verhältnismäßig steife Leitungen in den Nebenkanal einzuschieben. Aber auch bei selbstfahrenden Nebengeräten hat eine solche Fördereinrichtung Vorteile, weil dann das Nebengerät nicht unter Überwindung großer Reibungsverluste auch noch die manchmal über lange Wegstrecken im Hauptkanal verlaufenden Leitungen hinter sich herziehen muß, sondern im wesentlichen unbelastet in den Nebenkanal einfahren kann.

Wie bereits erwähnt, kann die Umlenkeinheit vorzugsweise schlauch- oder wannenförmig ausgebildet sein, wobei ein Ende der Umlenkeinheit am Hauptgerät befestigt ist, während das andere Ende in seiner Lage gegenüber dem Hauptgerät verstellbar ist, womit die Krümmung der Umlenkeinrichtung zum Nebenkanal hin einstellbar ist. Die Umlenkeinheit kann beispielsweise aus mehreren gelenkig miteinander verbundenen ringförmigen Elementen aufgebaut und über einen Seilzugmechanismus vom Hauptgerät aus in der Krümmung und damit der Lage des freien Endes einstellbar sein.

Weitere Vorteile und Einzelheiten der Erfindung werden anhand der nachstehenden Figurenbeschreibung näher erläutert.

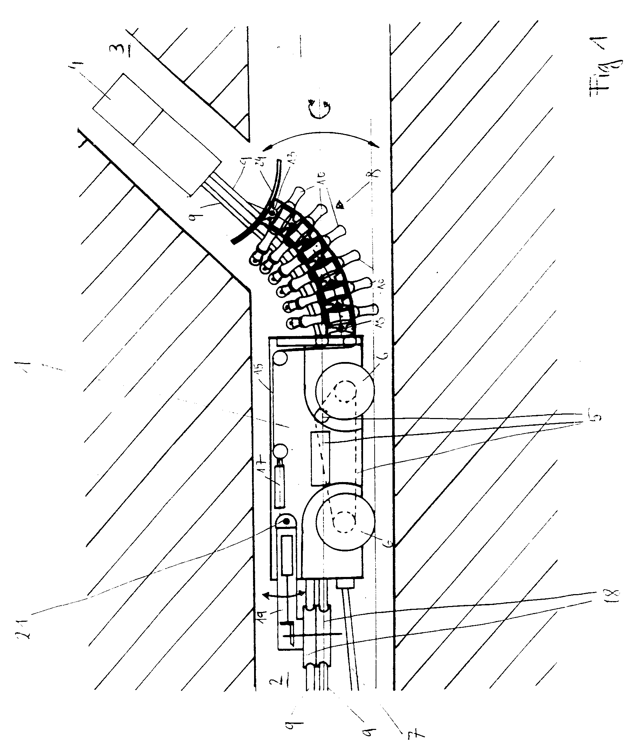

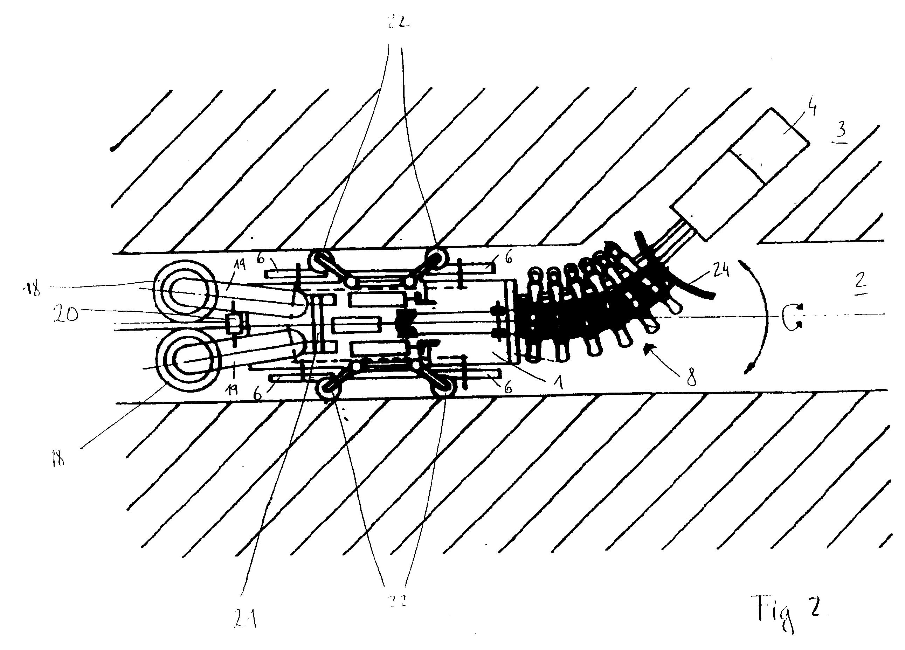

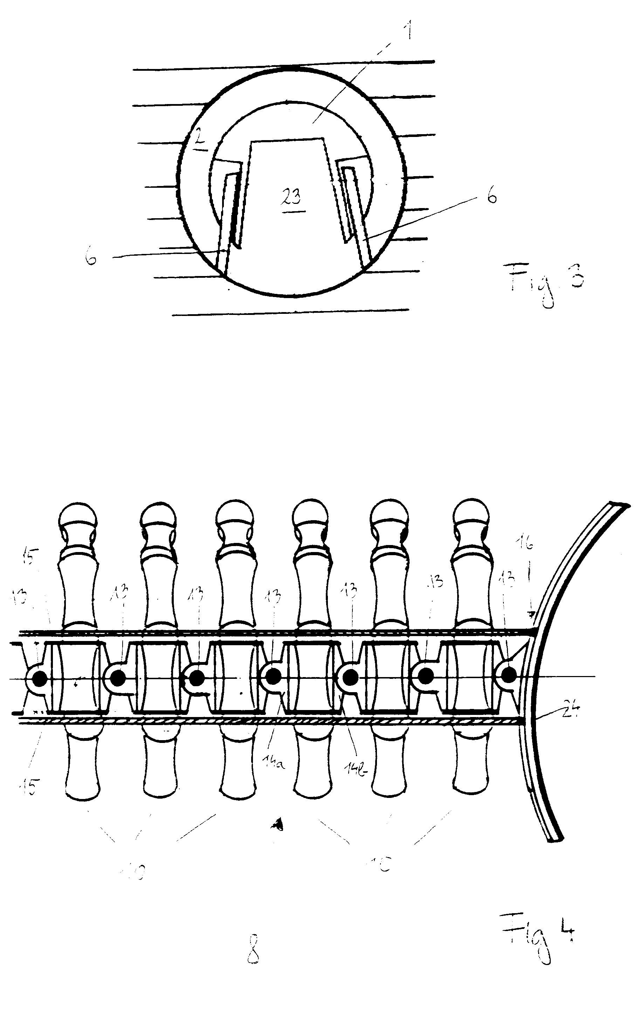

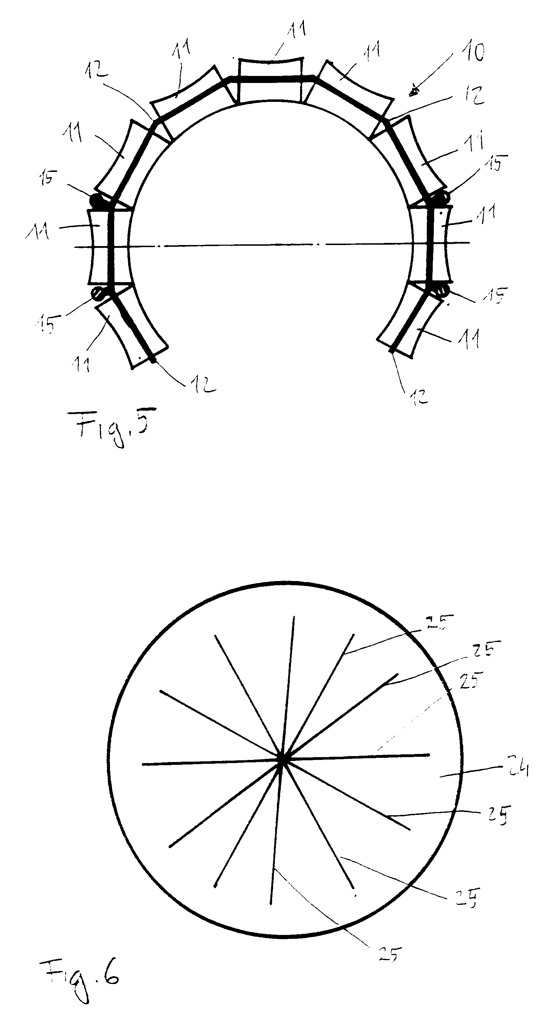

Die Fig. 1 zeigt ein Ausführungsbeispiel einer erfindungsgemäßen Einrichtung in einer Seitenansicht mit nach oben abzweigendem Nebenkanal. Die Fig. 2 zeigt eine Draufsicht mit seitlich abzweigendem Nebenkanal. Die Fig. 3 zeigt einen Querschnitt durch ein Ausführungsbeispiel eines Hauptgerätes der erfindungsgemäßen Einrichtung. Die Fig. 4 zeigt ein Ausführungsbeispiel einer Umlenkeinheit in einer Seitenansicht. Die Fig. 5 zeigt ein teilringförmiges Glied der Umlenkeinheit der Fig. 4. Die Fig. 6 zeigt eine Ansicht auf einen Schutzabweiser, der am freien Ende der Umlenkeinheit befestigbar ist.

Bei dem in Fig. 1 dargestellten Ausführungsbeispiel fährt ein Hauptgerät 1 in einem Hauptkanal 2, von welchem ein Nebenkanal 3 abzweigt. In diesem Nebenkanal 3 soll nun ein Nebengerät 4 eingebracht werden. Dabei kann es sich beispielsweise um Sanierungs-, Inspektions- oder Reinigungsgeräte handeln. Beim dargestellten Ausführungsbeispiel ist das Hauptgerät 1 als selbstfahrender Wagen ausgebildet, der einen eigenen Antrieb 5 und Träger 6 aufweist. Das Hauptgerät kann über eine Steuerleitung 7 von einem Einsatzfahrzeug aus ferngesteuert werden.

Erfindungsgemäß weist nun das Hauptgerät eine Umlenkeinheit 8 auf, die in ihrer Krümmung einstellbar ist und somit das Nebengerät 4 bzw. die zu diesem führenden Leitungen 9 vom Hauptkanal zum Nebenkanal hin umlenken kann. Insgesamt ist die Umlenkeinheit 8 schlauch- bzw. wannenförmig ausgebildet, um eine gute Führung für das Nebengerät 4 bzw. nachdem dieses durchgetreten ist, für die daran hängenden Leitungen 9 zu gewährleisten.

Bei dem in den Fig. 1, 4 und 5 dargestellten Ausführungsbeispiel besteht die Umlenkeinheit 8 aus mehreren teilringförmigen Gliedern 10 (siehe Fig. 5), die gegeneinander um mindestens eine Achse beweglich sind. Die teilringförmigen Glieder sind nach unten offen, damit allfällige Verschmutzungen nach unten frei austreten können und so die Funktionsweise nicht stören. Wie insbesondere die Fig. 5 zeigt, weisen die teilringförmigen Glieder 10 Rollen bzw. Walzen 11 auf, die auf einem gebogenen Drahtbügel 12 drehbar gelagert sind. Diese Konstruktion erlaubt ein reibungsarmes Durchführen des Nebengerätes 4 und - nachdem dieses durchgeführt ist - der daranhängenden Leitungen 9, die vom Nebengerät 4 aus durch das Hauptgerät 1 hindurch zu einem nicht dargestellten, im allgemeinen außerhalb des Kanals liegenden Steuerwagen führen.

Wie insbesondere die Fig. 4 schön zeigt, sind die teilringförmigen Glieder 10 durch Gelenke 13 miteinander verbunden. Diese Gelenke 13 liegen beiderseits seitlich zwischen den teilringförmigen Gliedern 10. Die Gelenke 13 erlauben es, die Umlenkeinheit in einer Ebene zu krümmen. Um auch außerhalb dieser Ebene liegende Nebenkanäle zu erreichen, gibt es zwei vorteilhafte Möglichkeiten. Die eine besteht darin, die ganze Umlenkeinheit 8 um eine vorzugsweise in Hauptkanalrichtung verlaufende Achse drehbar am Hauptgerät 1 zu lagern. Damit reicht die Krümmbarkeit der Umlenkeinheit 8 in einer Ebene aus, um zusammen mit der Verdrehbarkeit der gesamten Umlenkeinheit am Hauptgerät 1 die in verschiedene Richtungen abzweigenden Nebenkanäle 3 zu erreichen.

Eine andere Möglichkeit besteht darin, die Gelenke nach Art eines Kabelgelenkes auszubilden. Damit sind die teilringförmigen Glieder 10 nicht nur um eine einzige Achse gegeneinander beweglich, sondern zusätzlich noch um eine darauf senkrecht liegende Achse, sodaß die Umlenkeinheit 8 insgesamt in einer beliebigen Ebene in ihrer Krümmung einstellbar ist und damit nach Art eines "Rüssels" mit ihrem freien Ende praktisch jeden Nebenkanal 3 erreichen kann. Die Kardangelenke müssen nicht als exakte Kardangelenke konstruiert sein. Vielmehr reicht es aus, wenn man durch die gewählte Konstruktion eine Bewegbarkeit um zwei aufeinander senkrechte tatsächliche oder gedachte Achsen erzielt. Bei dem in Fig. 4 dargestellten Ausführungsbeispiel sind beispielsweise zwei mit Spiel ineinandersteckende Rohre 14a und 14b pro teilringförmigen Glied 10 vorgesehen, wobei die beiden Rohre 14a und 14b, die jeweils die Gelenkszapfen tragen, um eine senkrecht zu den Gelenkszapfen 13 verlaufende Achse relativ zueinander bewegbar sind.

Zur Einstellung der Krümmung der Umlenkeinheit 8 sind bei dem in den Fig. 1, 4 und 5 dargestellten Ausführungsbeispiel insgesamt vier Seilzüge 15 vorgesehen, zwei links und zwei rechts, wie dies in Fig. 5 besonders gut ersichtlich ist. Über diese Seilzüge 15, die am freien Ende 16 der Umlenkeinheit 8 befestigt sind und am anderen Ende über eine Antriebseinheit 17 am Hauptgerät 1 angezogen werden können (ferngesteuert von einem außenliegenden Steuerwagen), kann die Krümmung der Umlenkeinheit 8 je nach Lage des Nebenkanals 3 eingestellt werden.

Wie die Fig. 5 zeigt, sind die Teilringe 10 nach unten offen, sodaß Schmutz problemlos herausfallen kann. Um aber dennoch eine zuverlässige Führung des durchfahrenden Nebengerätes 4 bzw. der daran hängenden Leitungen 9 zu gewährleisten, ist es günstig, wenn die Teilringe 10 mehr als die Hälfte, vorzugsweise mehr als drei Viertel des vollen Kreisbogens umfassen.

Der untere ohne Rollen 11 versehene Bereich kann auch teilweise durch eine feste Auflage geschlossen sein, um es selbstfahrenden Nebengeräten 4 zu erlauben, durch die Umlenkeinheit zu fahren, ohne an den frei drehbaren Rollen 11 durchzurutschen.

Gemäß einer besonders bevorzugten Ausführungsform ist am Hauptgerät eine Fördereinrichtung vorgesehen, um eine vom Hauptkanal aus durch das Hauptgerät hindurch- bzw. an diesem vorbeilaufende Leitung bzw. Leitungsgruppe zum Nebengerät 4 zu fördern. Bei dem in den Fig. 1 und 2 dargestellten Ausführungsbeispiel weist diese Fördereinrichtung pro Leitung 9 zwei von beiden Seiten an die Leitung drückende angetriebene Rollen 18 auf. Diese Rollen 18 sind an Schwenkarmen 19 gelagert, die um eine vorzugsweise vertikale Achse am Hauptgerät 1 schwenkbar gelagert sind und über eine Spanneinrichtung 20 zueinander verspannt sind, sodaß die Rollen 18 die dazwischenliegende Leitung 19 einklemmen. Damit das Hauptgerät insgesamt nicht eine zu große Länge aufweist und damit auch um Ecken in einen Hauptkanal einsetzbar ist, sind die die Rollen 18 tragenden Schwenkarme 19 gemeinsam um eine vorzugsweise horizontale Achse 21 schwenkbar am Hauptgerät 1 gelagert.

Die Fig. 2 zeigt auch noch eine sich an den Kanalwänden des Hauptkanals abstützende Fixiereinrichtung 22, die es erlaubt, das Hauptgerät in seiner Position zu fixieren, wenn es an der richtigen Stelle vor dem Nebenkanal steht. Beim dargestellten Ausführungsbeispiel weist diese Fixiereinrichtung ausfahrbare Arme auf, an deren Enden sich Rollen befinden.

Wie die Fig. 3 zeigt, weist das Hauptgerät 1 eine nach unten offene U-Form auf, wobei an den beiden Wänden des im wesentlichen U-förmigen Hauptgerätes 1 die Räder 6 angebracht sind. Diese U-Form stellt einen U-förmigen Innenraum 23 bereit, der es ermöglicht, das Nebengerät 4 bzw. zum Nebengerät führende Leitungen 9 aufzunehmen. Damit kann bei kurzer Baulänge und geringem Gesamtdurchmesser das Hauptgerät samt Nebengerät zum Einsatzort (Abzweigung des Nebenkanals) bewegt werden. Wenn das Nebengerät 4 bereits im Nebenkanal 3 ist, können die Leitungen 9 problemlos durch den U-förmigen Innenraum 23 des Hauptgerätes 1 vom Hauptkanal aus zur Umlenkeinheit 8 und von dort zum Nebengerät 4 geführt werden.

Vor allem bei nach oben wegführenden Nebenkanälen 3 besteht eine Gefahr der Verschmutzung des Hauptgerätes bzw. der Umlenkeinheit 8 durch aus dem Nebenkanal herausfallenden Schmutz. Um dieses Problem zu vermeiden, ist gemäß einer Variante der Erfindung vorgesehen, daß das Hauptgerät an der dem Nebenkanal 3 zugewandten Seite einen Schmutzabweiser 24 aufweist. Besonders günstig ist es, den Schmutzabweiser 24 am freien Ende 16 der Umlenkeinheit 8 anzuordnen, weil dies die dem Nebenkanal am nächsten liegende Stelle ist. Um eine zuverlässige Schmutzabweisung zu erzielen, erstreckt sich der Schmutzabweiser radial zumindest über den Durchmesser der Umlenkeinheit 8, vorzugsweise sogar darüber hinaus. Konstuktiv kann der Schmutzabweiser 24 bei einfachem Aufbau und effizienter Funktionsweise im wesentlichen die Form einer Scheibe aufweisen, die aus gummielastischem Material besteht. Der Schmutzabweiser kann, wie dies die Fig. 6 zeigt, mehrere radiale Schlitze 25 aufweisen. Diese radialen Schlitze erlauben es, daß das Nebengerät 4 durch den Schmutzabweiser durchtreten kann, wobei sich nach dem Durchtritt der Schmutzabweiser von selbst im wesentlichen wieder vollständig schließt, bis auf die Leitungen 9, die weiterhin durch den Schmutzabweiser durchdringen. Der Schmutzabweiser 24 behindert den Durchtritt der Leitungen 9 kaum, liegt aber um diese herum relativ dicht an und verhindert so eine Verschmutzung der Umlenkeinheit 8 bzw. des Hauptgerätes 1.

Die Antriebe der erfindungsgemäßen Einrichtung beispielsweise zum Selbstfahren des Hauptgerätes 1 oder Nebengerätes 4 sowie zum Antrieb der Rollen 18 oder der Seilzüge 15 können auf verschiedenste Art realisiert werden. Beispielsweise sind elektrische, pneumatisch oder hydraulische Antriebe denkbar und möglich. Die Erfindung ist nicht auf die dargestellten Ausführungsbeispiele beschränkt. Beispielsweise ist es auch denkbar, daß die Umlenkeinheit aus einem nahezu geschlossenen Schlauch besteht. Dabei ist es beispielsweise möglich, daß der Schlauch aus einzelnen, übereinander schiebbaren, schuppenförmigen Gliedern besteht. Es ist aber auch denkbar, daß der Schlauch aus elastischem Material besteht, das eine Krümmung in verschiedene Richtungen zuläßt. Es ist zwar günstig, wenn das Nebengerät 4 bzw. die Leitungen 9 durch die Umlenkeinheit hindurchfahren. Grundsätzlich könnte aber die Umlenkeinheit auch im wesentlichen nur eine Führungsfunktion, beispielsweise im Sinne einer krümmbaren Schiene haben, an dem dann das Nebengerät entlang fährt bzw. die Leitungen entlang geführt werden.

Das Hauptgerät ist zwar vorteilhaft selbstfahrend, kann jedoch auch aus einem gezogenen Schlitten bestehen.

## Patentansprüche

1. Einrichtung, insbesondere für Kanalarbeiten, mit einem in einem Hauptkanal bewegbaren Hauptgerät und mit einem in einem Nebenkanal einbringbaren Nebengerät, dadurch gekennzeichnet, daß das Hauptgerät (1) eine Umlenkeinheit (8) aufweist, die in mindestens einer Ebene in ihrer Krümmung einstellbar ist, und durch die hindurch oder entlang der das Nebengerät (4) vom Hauptgerät (1) aus in den Nebenkanal (3) einbringbar ist.

2. Einrichtung nach Anspruch 1, dadurch gekennzeichnet, daß die Umlenkeinheit (8) aus mehreren ringförmigen oder teilringförmigen Gliedern aufgebaut ist, die gegeneinander um mindestens eine Achse beweglich sind.

3. Einrichtung nach Anspruch 2, dadurch gekennzeichnet, daß die ringförmigen oder teilringförmigen Glieder, aus denen die Umlenkeinheit aufgebaut ist, selbst mehrere Einzelkörper (11) aufweisen.

4. Einrichtung nach Anspruch 3, dadurch gekennzeichnet, daß die Einzelkörper (11) zumindest teilweise drehbar gelagerte Walzen, Rollen od.dgl. sind, die vorzugsweise auf einem gebogenen Drahtbügel aufgefädelt sind.

5. Einrichtung nach einem der Ansprüche 1 bis 4, dadurch gekennzeichnet, daß die ringförmigen oder teilringförmigen Glieder durch Gelenke (13) verbunden sind.

6. Einrichtung nach Anspruch 5, dadurch gekennzeichnet, daß die Gelenke nach Art eines Kardangelenkes ausgebildet sind und um zwei Achsen senkrecht zur Achse des jeweiligen Ringes beweglich sind, sodaß die Umlenkeinheit in einer beliebigen Ebene in ihrer Krümmung einstellbar ist.

7. Einrichtung nach einem der Ansprüche 1 bis 6, dadurch gekennzeichnet, daß zur Einstellung der Krümmung der Umlenkeinheit mindestens eine entlang der Umlenkeinheit verlaufender und vorzugsweise im Bereich des freien Endes der Umlenkeinheit befestigter Seilzug vorgesehen ist.

8. Einrichtung nach einem der Ansprüche 1 bis 7, dadurch gekennzeichnet, daß die Teilringe (10) nach unten offen sind, wobei die Teilringe (10) mehr als die Hälfte, vorzugsweise mehr als drei Viertel des vollen Kreisbogens umfassen.

9. Einrichtung, insbesondere für Kanalarbeiten, mit einem in einem Hauptkanal bewegbaren Hauptgerät und mit einem in einem Nebenkanal einbringbaren Nebengerät, insbesondere nach einem der Ansprüche 1 bis 8, dadurch gekennzeichnet, daß das Hauptgerät im wesentlichen eine nach unten offene U-Form aufweist.

10. Einrichtung nach Anspruch 9, dadurch gekennzeichnet, daß an den beiden Wänden des im wesentlichen U-förmigen Hauptgerätes (1) Räder (6) angebracht sind.

11. Einrichtung nach Anspruch 9 oder 10, dadurch gekennzeichnet, daß durch den im wesentlichen U-förmigen Innenraum (23) des Hauptgerätes (1) das Nebengerät (4) und/oder zumindest eine zum Nebengerät (4) führende Leitung (9) durchführbar sind.

12. Einrichtung, insbesondere für Kanalarbeiten, mit einem in einem Hauptkanal bewegbaren Hauptgerät und mit einem in einem Nebenkanal einbringbaren Nebengerät, insbesondere nach einem der Ansprüche 1 bis 11, dadurch gekennzeichnet, daß das Hauptgerät (1) an der dem Nebenkanal (3) zugewandten Seite einen Schmutzabweiser (24) aufweist.

13. Einrichtung nach Anspruch 12, dadurch gekennzeichnet, daß der Schmutzabweiser (24) am freien Ende (16) der Umlenkeinheit (8) angeordnet ist.

14. Einrichtung nach einem der Ansprüche 12 oder 13, dadurch gekennzeichnet, daß der Schmutzabweiser (24) im wesentlichen die Form einer Scheibe aufweist und aus gummielastischem Material besteht.

15. Einrichtung nach einem der Ansprüche 12 bis 14, dadurch gekennzeichnet, daß der Schmutzabweiser (24) mindestens einen, vorzugsweise mehrere radiale Schlitze (25) aufweist.
